# EUROPEAN PATENT SPECIFICATION

(11) **EP 0 372 819 B1**
(45) Date of publication and mention of the grant of the patent: **10.01.1996**
(21) Application number: 89312441.2
(22) Date of filing: 29.11.1989
(51) Int. Cl.: H02J 7/14

(54) **Electrical charging system control arrangement**
Anordnung zur Steuerung eines elektrischen Ladungssystems
Dispositif de commande d'un système de charge électrique

(30) Priority: 02.12.1988 US 279473
(43) Date of publication of application: 13.06.1990
(73) Proprietor: C.E. NIEHOFF & COMPANY, Evanston Illinois 60202 (US)
(72) Inventor: Bolle, David, Glenview Illinois 60025 (US)
(74) Representative: Cross, Rupert Edward Blount

(56) References cited:
- EP-A- 0 282 033
- US-A- 3 624 480
- US-A- 4 491 779
- US-A- 4 686 442

## Description

This invention relates to an electrical charging system control arrangement, and more particularly to such an arrangement for controlling a dual voltage supply electrical charging system, for example as used in motor vehicle electrical system for supplying dual voltage loads such as 12 and 24-volt loads.

Various arrangements have been provided for connecting an engine driven alternator or generator to dual voltage supplies comprising two serially connected 12-volt batteries. Examples of dual voltage charging systems which connect the output of alternators to the 12-volt and 24-volt supplies via full wave rectifiers are disclosed in US-A-4047088 and US-A-3624480. In addition, US-A-4,686,442 discloses a dual voltage charging system where a charging current is supplied to two 12-volt batteries in series alternately. If one battery is undercharged, the charging current is supplied to that battery for a greater proportion of time.

According to this invention there is provided an electrical charging system control arrangement for selectively connecting alternator means having respective phase windings for producing charging current at each of at least two outputs each corresponding to a different phase to a first battery and a second battery serially connected to the first battery, the control arrangement comprising a plurality of switchable means for respectively connecting the alternator means outputs to the second battery so that the second battery and the first battery in series therewith are charged by current from said outputs of the alternator means, said switchable means being switchably connectable to a battery connection node connecting the first battery and the second battery in series so that the first battery only is charged from the respective alternator means outputs, characterised by switching means arranged to switch first one, and the progressively more of said switchable means to charge only said first battery from the respective alternator means outputs associated with the switchable means as the voltage across the first battery is increasingly less than the voltage across the second battery, so that the amount of charging of the first battery is determined by the amount by which the voltage across the first battery is less than the voltage across the second battery.

The plurality of switchable means can comprise a first plurality of full wave bridge rectifiers, each of which is connected to a different one of the alternator means outputs and to the second battery, and a second plurality of full wave bridge rectifiers, each of which is connected to a different one of the alternator means outputs, and which is switchably connectible to the first battery.

Each of the second plurality of full wave bridge rectifiers can include a controllable unidirectional current carrying device connected to a different one of each of the alternator means outputs and to the first battery.

In this embodiment, the switching means comprises comparing means connected to each of the first battery and the second battery for comparing the voltage across the first battery with the voltage across the second battery, and means connected to and responsive to the comparing means for turning on one, then the next, and then the next of each of the controllable current carrying devices as the amount by which the voltage across the first battery is less than the voltage across the second battery increases, so that the alternator means outputs are sequentially connected to the first battery to charge the first battery.

The comparing means can produce a voltage signal, the magnitude of which is proportional to the difference between the actual difference and a desired difference between the voltage of the first battery and the voltage of the second battery, and the means responsive to the comparing means can comprise means serially connected one to another for incrementally reducing the voltage signal, and trigger means connected to the output of each of the serially connected means and connected to a different one of each of the controllable current carrying devices and responsive to a certain minimum voltage for turning on its respective current carry device.

The invention provides a control arrangement for an electrical charging system which charges the 12-volt and 24-volt supplies of a dual 12-volt/24-volt system, the control arrangement varying charging of the 12-volt supply depending on the rate of charging necessary in order to bring the 12-volt battery up to an appropriate charge level.

In dual voltage systems, the charging current is typically applied to the 24-volt supply. Further, charging of the 24-volt supply does, to a limited extent, help keep both of the serially connected 12-volt batteries at a sufficient voltage level. Frequently, however, loads on the 12-volt supply can severely drain the 12-volt supply battery, and prior control arrangements for charging systems have failed to provide adequate charging of the 12-volt system. The invention provides a control arrangement which progressively increases the rate of charging of the 12-volt supply depending on the extent to which the actual ratio of the voltage across the 12-volt supply battery to the voltage across the 12-volt supply battery connected to the 24-volt supply is less than a desired ratio.

Further, the invention provides a control arrangement for a dual voltage electrical system, which can effectively provide the dual voltages even when the serially connected batteries fail.

The invention will now be described by way of example with reference to the drawings, in which:-
Fig. 1 is a schematic illustration of an electrical charging system including a control arrangement in accordance with the invention; and
Fig. 2 is an illustration of a portion of the control arrangement of the system of Figure 1.

Like references are used for similar components throughout the drawings.

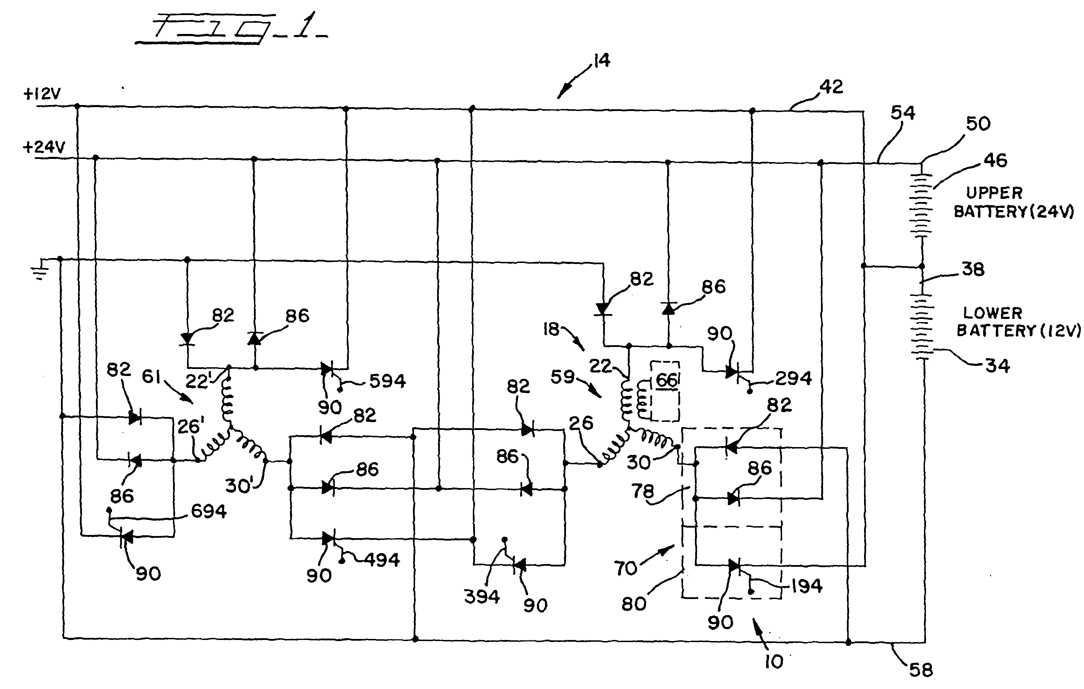

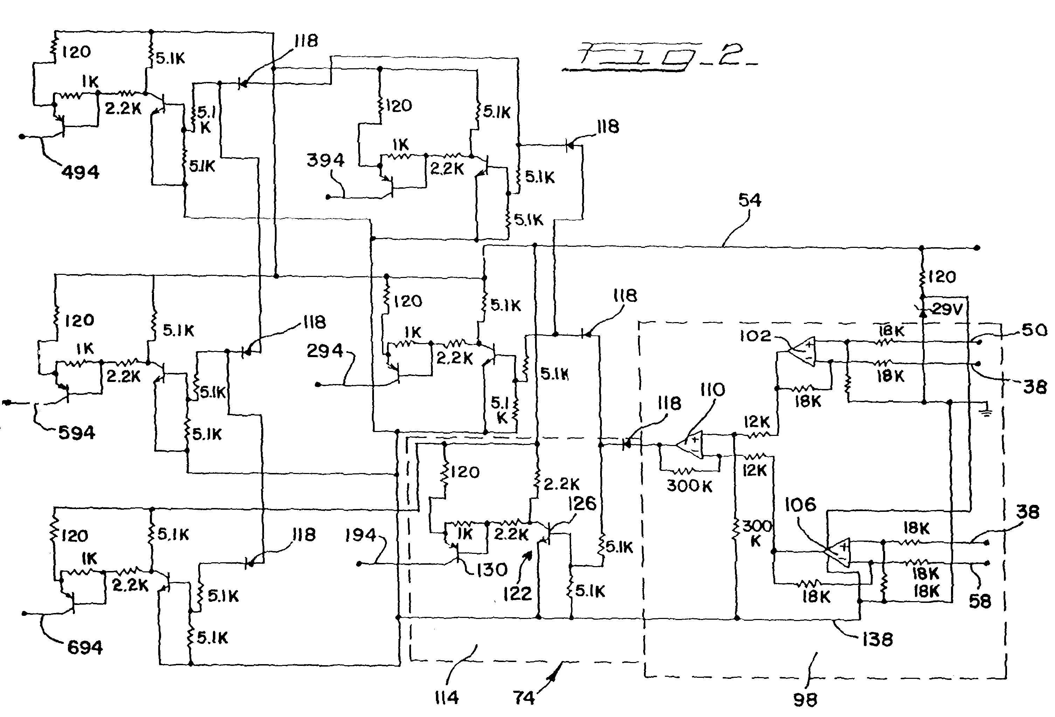

Figure 1 and Figure 2 illustrate a control arrangement 10 for electrical charging system 14, which provides for selectively connecting alternator means 18 for producing charging current at each three outputs 22, 26 and 30 to a first battery 34 having an output 38 and a second battery 46 having an output 50. The second battery 46 is serially connected to the first battery 34. The first battery 34 is a 12-volt battery, and its output 38 is connected to a 12-volt bus 42 which supplies current to a 12-volt load (not shown).

The second battery 46 is also a 12-volt battery, and since it is connected in series to the first 12-volt battery output 38, the second battery output 50 is at approximately 24 volts. The second battery output 50 is connected to a 24-volt bus 54 which in turn is connected to a 24-volt load (not shown).

The alternator means 18 comprises a first stator coil set 59, and a second stator coil set 61. The construction of each of the stator coil sets is the same, so the construction of only the first alternator is explained in detail.

The stator coil set 59 includes three stator coils 62, each of which is connected at one end to each of the other stator coils 62. The opposite ends of the stator coils 62 constitute the three outputs 22, 26 and 30 of the first alternator 59. Likewise, the second alternator 61 also includes three outputs 22', 26' and 30'.

The stator coil sets 59 and 61 also share a field coil and a voltage regulator 66 of a conventional design. The voltage regulator controls the amount of current which passes through the field coil in order to ensure that sufficient charging voltage and current are always provided for the 24-volt bus 54. In other embodiments a single alternator, or a single alternator with multiple sets of stator coils, can be used.

The control arrangement 10 comprises a plurality of switchable means 70 for connecting each of the alternator means outputs or taps 22, 26 30, 22', 26' and 30' to the second battery output 50 so that the second battery 46 and the first battery 34 connected thereto are charged by the alternator means 18. More particularly, the switchable means 70 are switchably connectible to the first battery output 38 so that the first battery 34 can be selectively charged by the alternator means 18.

The control arrangement also includes switching means 74 (see Fig. 2) for switching first one, then the next, and then the next of each of the switchable means 70 as the voltage across the first battery 34 is increasingly less than the voltage across the second battery 46 so that the rate of charging of the first battery 34 is determined by the amount by which the voltage across the first battery 34 is less than the voltage across the second battery 46.

More particularly, the plurality of switchable means 70 comprises a first plurality of six full wave bridge rectifiers 78, each of which is connected to a different one of the taps 22, 26, 30, 22', 26' and 30'. Each of the full wave bridge rectifiers 78 comprises a first diode 82 connected at its cathode to each of the alternator means outputs and connected at its anode to ground. Each of the full wave bridge rectifiers 78 further includes a second diode 86 having its anode connected to its respective alternator output and its cathode connected to the second battery bus 54.

The plurality of switchable means 70 also includes a second plurality of full wave bridge rectifiers 80 so connected to the first battery output 38. Each of the full wave bridge rectifiers 80, in this embodiment also includes the first diode 82 connected at its cathode to each of the taps and connected at its anode to the ground. In other embodiments, separate diodes can be used.

Each of the second plurality of full wave bridge rectifiers 80 further includes a controllable unidirectional current carrying device in the form of thyristor or SCR 90 connected to a different one of each of the taps 22, 26, 30, 22', 26' and 30' and to the first battery output 38. More particularly, each of the SCR's 90 has its anode connected to its respective alternator means output and its cathode connected to the first battery output 38. Each of the SCR gates is connected to the switching means 74, as hereinafter explained. The gates are labeled 194, 294, 394, 494, 594 and 694, respectively, for each of the six second plurality of full wave bridge rectifiers 80.

Referring now to Figure 2, the switching means 74 comprises comparing means 98 connected to the first battery output 38 and the second battery output 50 and to ground for comparing the voltage across the first battery 34 and the voltage across the second battery 46, and responsive means 114 connected to and responsive to the comparing means 98 for turning on one, then the next, and the next of each of the SCR's 90 as the difference between the voltage across the second battery 46 and the voltage across the first battery 34 increases so that the taps 22, 26, 30, 22', 26' and 30' are sequentially connected to the first battery output 38 to charge the first battery 34.

More particularly, the comparing means 98 comprises a first buffer 102 connected to the terminals of the second battery 46 and a second buffer connected to the terminals of the first battery 34. The outputs of the first buffer 102 and the second buffer 106, which are the voltages across the second battery 46 and the first battery 34, respectively, are inputted into an amplifier 110. The amplifier 110 produces a voltage signal proportional to the difference between the voltages across the first and second batteries.

The responsive means 114 comprises means in the form of diodes 118 serially connected one to another for incrementally reducing the voltage signal. The responsive means 114 also includes trigger means 122 connected to a different one of each of the six SCRs 90 and connected to the output of each of the serially connected diodes 118. The trigger means 122 is responsive to a minimum voltage level for turning on its respective SCR 90, thereby directing the alternator charging current at its respective output to the first battery 34 instead of the second battery 46.

More particularly, the trigger means 122 comprises a switching npn transistor 126 having its base connected through a resistor to its respective diode 118, its collector connected through a resistor to voltage bus 54, through resistor 129 to the base of a switching pnp transistor 130, and through another resistor to the emitter of the transistor 130. The emitter of the transistor 126 is connected to ground. The collector of the transistor 130 is connected to the respective gate 194 through 694 of its respective SCR 90.

The control 10 thus operates as follows. The combination of the first plurality of full wave bridges rectifiers 78 and the voltage regulators 66 hold the 24-volt supply bus 54 at the appropriate voltage level. The comparing means 98 compares the voltage across each of the first and second batteries 34 and 46, respectively, and determines if the voltage of the 12-volt bus has dropped below the voltage across the terminals of the second battery 46. If it has, any where from one to six of the taps 22, 26, 30, 22', 26' and 30' will be switched over to charging the 12-volt supply, depending on how much the voltage across the first battery 34 is less than the voltage across the second battery 46.

The voltage signal from the amplifier 110 is proportional to this voltage difference, the size of the signal having been predetermined to correspond to the rate of charging deemed appropriate for that difference in voltage. If the voltage drop across each diode is about 1.8 volts, three of the trigger means 122 will operate to switch from the first rectifiers 78 to the second rectifiers 86. More particularly, when the voltage at the output of the diode 118 is above the system ground, current will flow through the base of the first transistor 126 to ground. This will turn the transistor 130 on, thereby causing current to flow from the emitter of the second transistor 130 through its base to the emitter of the first transistor 126. The second transistor 130 is thus turned on, thereby causing current to flow to the gate of the SCR 90, turning it on for the next alternating current cycle.

When the SCR 90 is on, the first full wave bridge rectifier 78 is back biased and turned off, so current only flows from the respective alternator means output through the second full wave rectifier 80 to the 12-volt supply. When the 12-volt bus voltage returns to normal, the trigger means 122 switches off, thereby leaving the SCR 90 off during the next alternating current cycle, returning the first full wave rectifier 78 to charging of the second battery 46.

## Claims

1. An electrical charging system control arrangement (10) for selectively connecting alternator means (18) having respective phase windings for producing charging current at each of at least two outputs (22,26,30) each corresponding to a different phase to a first battery (34) and a second battery (46) serially connected to the first battery (34), the control arrangement (10) comprising a plurality of switchable means (70) for respectively connecting the alternator means outputs (22,26,30) to the second battery (46) so that the second battery (46) and the first battery (34) in series therewith are charged by current from said outputs (22,26,30) of the alternator means (18), said switchable means (70) being switchably connectable to a battery connection node (42) connecting the first battery (34) and the second battery (46) in series so that the first battery (34) only is charged from the respective alternator means outputs (18), characterised by switching means (74) arranged to switch first one, and then progressively more of said switchable means (70) to charge only said first battery from the respective alternator means outputs (22,26,30) associated with the switchable means (70) as the voltage across the first battery is increasingly less than the voltage across the second battery, so that the amount of charging of the first battery is determined by the amount by which the voltage across the first battery is less than the voltage across the second battery.

2. An arrangement as claimed in claim 1, wherein each of said switchable means (70) comprises a first rectifier (86) connected between the respective output (22,26,30) and the second battery (46), and a second rectifier (80) connected between the respective output node (22,26,30) and the battery connection node (42), said second rectifier (80) being controllably switchable between an off state and an on state.

3. An arrangement as claimed in claim 2, wherein each of the second rectifiers (80) comprises a respective silicon controlled rectifier (90).

4. An arrangement as claimed in claim 2 or 3, wherein the switching means (74) further comprises: means (98) for generating a voltage signal having a magnitude indicative of the difference between the voltage of the second battery (46) and the voltage of the first battery (34), and means (114), responsive to the voltage signal for turning on first one, and then progressively more of said second rectifiers (80) in accordance with the magnitude of the voltage signal.

5. An arrangement as claimed in claim 4, wherein the means for turning on (114) comprises: means (118), serially connected to one another, for incrementally reducing the voltage signal and trigger means (122) connected to the serially connected means and to a respective second rectifier (80) and responsive to a minimum voltage level for turning on a respective second rectifier (80).

6. An arrangement as claimed in claim 2, wherein said second rectifier (80) includes a controllable unidirectional current carrying device (90) connected to a different one of the outputs (22,26,30) and to the battery connection node (42).

7. An arrangement as claimed in any preceding claim, wherein said alternator means (18) supplied current at each of at least three outputs (22,26,30).

## Patentansprüche

1. Anordnung (10) zur Steuerung eines elektrischen Ladungssystems, die eine Drehstrom-Generatoreinrichtung (18) mit jeweiligen Phasenwicklungen, die einen Ladungsstrom an jedem von wenigstens zwei Ausgängen (22, 26, 30) erzeugen, die je einer anderen Phase entsprechen, mit einer ersten Batterie (34) und einer mit der ersten Batterie (34) in Reihe geschalteten zweiten Batterie (46) selektiv verbindet, wobei die Steueranordnung (10) eine Mehrzahl von schaltbaren Einrichtungen (70) umfaßt, die die Ausgänge (22, 26, 30) der Drehstrom-Generatoreinrichtung jeweils mit der zweiten Batterie (46) verbinden, so daß die zweite Batterie (46) und die mit ihr in Reihe liegende erste Batterie (34) durch Strom von den Ausgängen (22, 26, 30) der Drehstrom-Generatoreinrichtung (18) geladen werden, wobei die schaltbaren Einrichtungen (70) mit einem Batterie-Verbindungsknoten (42), der die erste Batterie (34) und die zweite Batterie (46) in Reihe schaltet, schaltbar verbindbar sind, so daß nur die erste Batterie (34) von den jeweiligen Ausgängen der Drehstrom-Generatoreinrichtung (18) geladen wird, gekennzeichnet durch eine Schalteinrichtung (74), die eingerichtet ist, um zuerst eine und dann stufenweise mehr der schaltbaren Einrichtungen (70) zu schalten, um nur die erste Batterie von den mit den schaltbaren Einrichtungen (70) verbundenen jeweiligen Ausgängen (22, 26, 30) der Drehstrom-Generatoreinrichtung zu laden, sowie die Spannung über der ersten Batterie zunehmend kleiner als die Spannung über der zweiten Batterie ist, so daß die Menge des Ladens der ersten Batterie durch die Menge bestimmt wird, um die die Spannung über der ersten Batterie kleiner ist als die Spannung über der zweiten Batterie.

2. Anordnung nach Anspruch 1, bei der jede der schaltbaren Einrichtungen (70) einen ersten Gleichrichter (86) umfaßt, der zwischen den jeweiligen Ausgang (22, 26, 30) und die zweite Batterie (46) geschaltet ist, sowie einen zweiten Gleichrichter (80), der zwischen den jeweiligen Ausgangsknoten (22, 26, 30) und den Batterie-Verbindungsknoten (42) geschaltet ist, wobei der zweite Gleichrichter (80) zwischen einem Aus-Zustand und einem Ein-Zustand steuerbar schaltbar ist.

3. Anordnung nach Anspruch 2, bei der jeder der zweiten Gleichrichter (80) einen jeweiligen siliziumgesteuerten Gleichrichter (90) umfaßt.

4. Anordnung nach Anspruch 2 oder 3, bei der die Schalteinrichtung (74) weiter umfaßt: eine Einrichtung (98), die ein Spannungssignal mit einer Größe erzeugt, die die Differenz zwischen der Spannung der zweiten Batterie (46) und der ersten Batterie (34) anzeigt, und eine Einrichtung (114), die auf das Spannungssignal anspricht und nach Maßgabe der Größe des Spannungssignals zuerst einen und dann stufenweise mehr der zweiten Gleichrichter (80) einschaltet.

5. Anordnung nach Anspruch 4, bei der die Einrichtung zum Einschalten (114) umfaßt: Einrichtungen (118), die seriell miteinander verbunden sind und das Spannungssignal schrittweise vermindern, und eine Triggereinrichtung (122), die mit den seriell verbundenen Einrichtungen und mit einem jeweiligen zweiten Gleichrichter (80) verbunden ist und auf einen Mindestspannungspegel anspricht, um einen jeweiligen zweiten Gleichrichter (80) einzuschalten.

6. Anordnung nach Anspruch 2, bei der der zweite Gleichrichter (80) eine steuerbare unidirektionale Stromführungseinrichtung (90) umfaßt, die mit einem unterschiedlichen der Ausgänge (22, 26, 30) und mit dem Batterie-Verbindungsknoten (42) verbunden ist.

7. Anordnung nach einem der vorangehenden Ansprüche, bei der die Drehstrom-Generatoreinrichtung (18) an jedem von wenigstens drei Ausgängen (22, 26, 30) Strom liefert.

## Revendications

1. Ensemble (10) de commande d'un circuit électrique de charge, destiné à connecter sélectivement des dispositifs alternateurs (18) ayant des bobinages respectifs de phase destinés à créer un courant de charge à chacune d'au moins deux sorties (22, 26, 30), correspondant chacune à une phase différente, à une première batterie (34) et une seconde batterie (46) connectée en série avec la première batterie (34), l'ensemble de commande (10) comprenant plusieurs dispositifs commutables (70) destinés à connecter respectivement les sorties (22, 26, 30) des dispositifs alternateurs à la seconde batterie (46) afin que la seconde batterie (46) et la première batterie (34) montée en série avec elle soient chargées par le courant provenant des sorties (22, 26, 30) des dispositifs alternateurs (18), le dispositif commutable (70) pouvant être connecté de manière commutée à un noeud (42) de connexion de la première batterie (34) à la seconde batterie (46) en série afin que seule la première batterie (34) se charge à partir des sorties respectives (18) des dispositifs alternateurs, caractérisé par un dispositif de commutation (74) destiné à commuter un premier dispositif puis, progressivement, un plus grand nombre de dispositifs commutables (70) pour la charge uniquement de la première batterie à partir des sorties respectives des dispositifs alternateurs (22, 26, 30) associés aux dispositifs commutables (70) lorsque la tension aux bornes de la première batterie est de plus en plus inférieure à la tension aux bornes de la seconde batterie, si bien que l'amplitude de charge de la première batterie est déterminée par l'amplitude avec laquelle la tension aux bornes de la première batterie est inférieure à la tension aux bornes de la seconde batterie.

2. Ensemble selon la revendication 1, dans lequel chacun des dispositifs commutables (70) comporte un premier redresseur (86) connecté entre la sortie respective (22, 26, 30) et la seconde batterie (46), et un second redresseur (80) connecté entre le noeud respectif de sortie (22, 26, 30) et le noeud (42) de connexion des batteries, le second redresseur (80) pouvant être commuté de manière réglable entre un état d'arrêt et un état de fonctionnement.

3. Ensemble selon la revendication 2, dans lequel chacun des seconds redresseurs (80) comprend un thyristor respectif (90) .

4. Ensemble selon la revendication 2 ou 3, dans lequel le dispositif de commutation (74) comporte en outre un dispositif (98) destiné à créer un signal de tension dont l'amplitude est représentative de la différence entre la tension de la seconde batterie (46) et la tension de la première batterie (34), et un dispositif (114) commandé par le signal de tension et destiné à mettre à l'état conducteur un premier des seconds redresseurs (80) puis progressivement un plus grand nombre de ces redresseurs en fonction de l'amplitude du signal de tension.

5. Ensemble selon la revendication 4, dans lequel le dispositif destiné à mettre à l'état conducteur (114) comporte des dispositifs (118) connectés en série l'un à l'autre et destinés à réduire progressivement le signal de tension, et un dispositif (122) de déclenchement connecté aux dispositifs connectés en série et à un second redresseur respectif (80) et commandé par un niveau minimal de tension afin qu'il mette à l'état conducteur un second redresseur respectif (80).

6. Ensemble selon la revendication 2, dans lequel le second redresseur (80) comprend un dispositif commandé (90) de transmission unidirectionnelle de courant, connecté à une sortie différente parmi les sorties (22, 26, 30) et au noeud (42) de connexion des batteries.

7. Ensemble selon l'une quelconque des revendications précédentes, dans lequel les dispositifs à alternateur (18) transmettent du courant à chacune d'au moins trois sorties (22, 26, 30).
